# EUROPÄISCHE PATENTSCHRIFT

(11) **EP 4 240 518 B1**
(45) Veröffentlichungstag und Bekanntmachung des Hinweises auf die Patenterteilung: **11.06.2025**
(21) Anmeldenummer: 21805940.0
(22) Anmeldetag: 03.11.2021
(51) Int. Cl.: B01D 61/18, B01D 63/04

(54) **ZUSAMMENSTECKBARE FILTERMODULANORDNUNG**
INTERLOCKABLE FILTER MODULE ARRANGEMENT
ARRANGEMENT DES MODULES DE FILTRATION CONNECTABLES

(30) Priorität: 03.11.2020 DE 102020128976
(43) Veröffentlichungstag der Anmeldung: 13.09.2023
(73) Patentinhaber: Fresenius Medical Care Deutschland GmbH, 61352 Bad Homburg (DE)
(72) Erfinder: HEINZ, Thomas, 61352 Bad Homburg (DE); WEHMEYER, Wolfgang, 61352 Bad Homburg (DE)
(74) Vertreter: Stolmár & Partner Patentanwälte PartG mbB
(86) Internationale Anmeldenummer: PCT/EP2021/080559
(87) Internationale Veröffentlichungsnummer: WO 2022/096534

(56) Entgegenhaltungen:
- WO-A1-2008/071516
- WO-A1-2015/050764
- WO-A2-2009/057903
- US-A1- 2002 179 517
- US-A1- 2005 045 552

## Beschreibung

### Gebiet der Erfindung

Die Erfindung betrifft eine Zusammensteckbare Filtermodulanordnung zum Filtern von Fluiden, die in einer Lagerstütze aneinander montierbar sind.

### Stand der Technik

Es sind verschiedene Filtersysteme bekannt, die bspw. für industrielle Zwecke Fluide filtern und das gefilterte Fluid wieder ableiten. Da bei industriellen Zwecken oft eine große Menge Filtrat bereitgestellt werden muss ist es vorteilhaft, mehrere Filtermodule zu verwenden und dadurch die Filtratmenge zu erhöhen. Ein solches Filtersystem ist beispielsweise in der WO 2013/048801 A1 offenbart. Dieses umfasst eine Filtermodulanordnung, die einen Behälter mit einer darin angeordneten Filterpatrone und einen mit einem Ende des Behälters gekoppelten Sammler umfasst, wobei der Kopf ein Gehäuse mit einem offenen oberen Ende und einem unteren Ende sowie eine Endkappe enthält. Ein Abschnitt, der auf eine komplementäre Struktur passt, die durch das Innere des gesamten offenen oberen Endes des Gehäuses definiert ist, so dass er entfernbar mit dem Gehäuse und der Endkappe in Eingriff kommt, definiert einen Durchgang, durch den Flüssigkeit aus dem Behälter herausfließen kann. Die Filtermodulanordnung ermöglicht eine Verteileranordnung, die verwendet wird, um Flüssigkeiten zu und von einem Filtersystem zu fördern, das mehrere solcher Module umfasst. Die Montage solcher Filtersysteme ist allerdings zeitaufwendig, weil der Zusammenbau der Module an den Verbindungsrohren präzise durchgeführt werden muss und durch die Filtermodule nur schwierig aneinander ausgerichtet werden können.

Die WO 2015/050764 A1 offenbart ein Verfahren zum Reparieren eines Membranfiltrationsmoduls, das in Fluidverbindung mit einer Vielzahl von zusätzlichen Membranfiltrationsmodulen steht, wobei eine Fluidübertragungsanordnung mit dem Membranfiltrationsmodul in Fluidverbindung gebracht wird, das Membranfiltrationsmodul von der Vielzahl von zusätzlichen Membranfiltrationsmodulen fluidisoliert wird, Flüssigkeit innerhalb des Membranfiltrationsmoduls in die Fluidübertragungsanordnung gedrückt wird, indem ein unter Druck stehendes Gas in das Membranfiltrationsmodul eingeführt wird, Freisetzen des Druckgases aus dem Membranfiltrationsmodul, Fluidtrennung der Fluidtransferanordnung von dem Membranfiltrationsmodul, Reparieren einer oder mehrerer beschädigter Membranen in dem Membranfiltrationsmodul und Fluidverbindung des Membranfiltrationsmoduls mit der Vielzahl von zusätzlichen Membranfiltrationsmodulen.

Die WO 2009/057903 A2 offenbart ein Filtermembranmodul und eine Filtriervorrichtung mit demselben, die in der Lage ist, eine Schwingung des Filtermembranmoduls während eines Belüftungsvorgangs für eine Wartungsreinigung der Filtermembran erheblich zu reduzieren und zu verhindern, dass ein Riss in dem Filtermembranmodul durch die Schwingung auftritt, wobei das Filtermembranmodul umfasst: eine Filtermembran; einen Kopf, an den die Filtermembran angegossen ist und der eine erste seitliche Seite und eine zweite seitliche Seite gegenüber der ersten seitlichen Seite aufweist; eine erste Verbindungseinheit, die an der ersten seitlichen Seite vorgesehen ist; und eine zweite Verbindungseinheit, die an der zweiten seitlichen Seite vorgesehen ist.

Die US 2002/0179517 A1 offenbart eine Vorrichtung zum Filtern einer Flüssigkeit in einem Tank hat eine Vielzahl von Elementen und einen Rahmen zum Halten der Elemente, während sie in die Flüssigkeit eingetaucht sind. Die Elemente verfügen über eine Vielzahl von Hohlfasermembranen, die an einem oberen Sammler und einem unteren Sammler befestigt und zwischen diesen aufgehängt sind. Die Membranen stehen in Fluidverbindung mit einem oder mehreren Durchlasskanälen in einem oder mehreren der Kopfstücke. Lösbare Befestigungen zwischen den Kopfstücken und dem Rahmen ermöglichen es dem Rahmen, die Elemente lösbar an ihren Kopfstücken zu halten. Die Größe und Konfiguration des Rahmens bestimmt die Position der oberen und unteren Köpfe der einzelnen Elemente zueinander. Die Verbindungen zwischen den Permeatkanälen und einem oder mehreren am Rahmen befestigten Sammelrohren für das Permeat sind lösbare und wiederverschließbare Verbindungen, die durch die Bewegungen beim Einsetzen oder Herausnehmen eines Elements in den bzw. aus dem Rahmen automatisch hergestellt oder unterbrochen werden.

Die WO 2008/071516 A1 offenbart Anzapfungen, wobei die Struktur einen Rahmen umfasst, der einen unteren Verteiler, einen mittleren Verteiler und einen oberen Verteiler hält, die sich im Wesentlichen horizontal erstrecken, wobei jeder Verteiler Anzapfungen umfasst und Verbindungselemente zum Verbinden von zumindest einigen Anzapfungen jedes der Membranmodule mit den Anzapfungen der Verteiler enthält. Erfindungsgemäß umfassen die Verbindungselemente T-Stücke, die mindestens an einem der Verteiler vorgesehen sind, und mindestens einen ersten Satz abnehmbarer rohrförmiger Elemente, die zur Verbindung der Membranmodule eines ersten Typs mit den Verteilern geeignet sind.

Die US 2005/045552 A1 offenbart eine modulare Flüssigkeitsbehandlungsanordnung bereit, bei dem Module des Systems jeweils einen Kopf haben, der in unterschiedlichen Konfigurationen mit einem oder mehreren Köpfen (eines oder mehrerer anderer Module) verbunden werden kann. In einigen Ausführungsformen verhindert die Beziehung zwischen einer Kartusche des Moduls und ihrem entsprechenden Kopf, dass Flüssigkeit zwischen die Kartusche und eine äußere Hülle des Moduls eindringt. Einige Ausführungsformen stellen außerdem ein Modul bereit, das einen Kopf mit im Wesentlichen konzentrischen Einlass- und Auslassöffnungen in Flüssigkeitskommunikation mit einer an den Kopf gekoppelten Kartusche aufweist.

### Darstellung der Erfindung

Aufgabe der Erfindung ist es eine Filtermodulanordnung bereitzustellen, bei der die Filtermodule mit hoher Präzision einfach zueinander ausgerichtet, dicht gepackt und schnell aufgebaut werden können.

Die Aufgabe wird gelöst durch eine zusammensteckbare Filtermodulanordnung nach Anspruch 1. Weitere, die Erfindung ausgestaltende Merkmale sind in den abhängigen Ansprüchen enthalten.

Eine erfindungsgemäße zusammensteckbare Filtermodulanordnung zum Filtern von Fluiden, umfasst eine Mehrzahl von Filtermodulen, wobei ein Filtermodul einen Filtratbereich, einen mit dem Filtratbereich verbundenen Fluidzuflusskanal, einen mit dem Filtratbereich verbundenen Fluidabflusskanal und eine Filtereinrichtung aufweist, durch die Fluid aus dem Fluidzuflusskanal in den Filtratbereich gefiltert wird, wobei der Fluidzuflusskanal und der Fluidabflusskanal jeweils ein Eingangsöffnung und eine Ausgangsöffnung aufweisen, die ineinander steckbar ausgebildet sind, so dass aus einer Vielzahl von Filtermodulen jeweils ein gemeinsamer Fluidkanal ausgebildet ist, und wobei die Filtermodule zumindest ein Laufelement aufweisen, an dem das Filtermodul lagerbar ist und eine Lagerstütze, in dem die Mehrzahl der Filtermodule aufgenommen und befestigt sind, wobei die Lagerstütze zumindest eine erste Führungsschiene aufweist, in denen die Filtermodule mittels der Laufelemente bewegbar geführt und gelagert sind. Bevorzugt ist, dass die Filtermodule das Laufelement am Header aufweisen, insbesondere an der Oberseite des Headers. Solche Filtermodule, die Laufelemente aufweisen, die in Führungsschienen einer Lagerstütze laufen, sind sehr einfach zu verbinden, da die Verbindungskanäle durch die das Zusammenwirken der Laufelemente mit den Führungsschienen zueinander schon in der Höhe ausgerichtet sind. Ein Lagerstütze umfasst dabei alle Arten von äußerer Lagerung, beispielsweise Wände von Gebäuden, Gitter, Gerüste, Lagerstützen, Balken oder jede andere Art von Lagerung, die eine Vielzahl von Filtermodulen tragen kann. Gerüste, die die gesamte Filteranordnung aufnehmen, sind besonders bevorzugt. Die einfache Einsteckbarkeit der zueinander passenden Fluidabflüsse unterstützt die schnelle Montage. Ineinander Verschiebbare Module sind sehr schnell aufzubauen, insbesondere mit Schienen, die eine Ausrichtung extrem vereinfacht.

Die Lagerstütze kann eine Vielzahl von parallelen Führungsschienen aufweisen. Dadurch können mehrere Filtermodule aufgenommen werden und/oder die Filtermodule können an zumindest zwei Stellen gelagert werden. Ferner kann die Lagerstütze eine Vielzahl von senkrecht zueinander verlaufenden Führungsschienen aufweisen. Damit kann die Flexibilität der Modulanordnung, insbesondere beim Austausch von einzelnen Filtermodulen erhöht werden.

Die Ein- und Ausgangsöffnungen weisen bevorzugt eine Dichtung auf. Bevorzugt ist die Dichtung so gestaltet, dass bei Beaufschlagung der Filteranordnung mit dem Fluid bereits bei einem Fluiddruck von 1,0 bar, bevorzugt von 0,5 bar die Dichtwirkung verstärkt wird. Dies wird dadurch gewährleistet, dass die Dichtung einen Querschnitt in der Form eines liegenden V aufweist. Bevorzugt gibt es einen Vorsprung, insbesondere einen dreiecksförmigen Vorsprung, am oberen Ende der rechteckförmigen Basis. Weiter bevorzugt ist auch der obere Schenkel sich verjüngend ausgebildet.

Eine Filtermodulanordnung umfasst vorzugsweise eine Fixiervorrichtung zum Zusammendrücken und Halten der Filtermodule in der Lagerstütze. Eine solche Fixiervorrichtung kann zumindest zwei Befestigungselemente aufweisen, die jeweils an den äußersten Filtermodulen befestigbar sind, und eine Spannvorrichtung zum Aufbringen einer Spannkraft auf die zwischen den Befestigungselementen befindlichen Filtermodulen.

Ebenfalls möglich ist eine Fixiervorrichtung zum Zusammendrücken und Halten der Filtermodule in der Lagerstütze, wobei die Fixiervorrichtung an einem äußersten Filtermodul und an der Lagerstütze befestigbar ist und eine Spannvorrichtung zum Aufbringen einer Spannkraft auf das Filtermodul aufweist. Die Montage und vor allem die Sicherheit gegen unbeabsichtigte Bewegungen der Filtermodule wird verbessert. Solch eine Fixiervorrichtung kann in den Modulen und/oder außerhalb der Module ausgebildet sein.

Das Filtermodul weist zwei oder mehr Laufelemente aufweisen. Diese sind bevorzugt an zumindest zwei voneinander beabstandeten Stellen angeordnet, insbesondere auch in der gleichen Führungsschiene gelagert. Dadurch wird ein Verdrehen der Filtermodule zuverlässig verhindert. Die Filtermodule weisen zumindest zwei oder mehr Laufelement auf, die mit einer zweiten oder weiteren Führungsschiene zusammenwirken. Das bedeutet einen besseren Halt, eine bessere Führung und eine besser verteilte Gewichtskraft, wodurch die Beanspruchung der Bauteile und damit auch der Verschleiß verringert wird.

Das oder die Laufelement(e) weisen bevorzugt Rollen (Räder, Kugel, Walzen,) zur reibungsarmen Bewegung in den Führungsschienen auf.

Zumindest eine Führungsschiene weist vorzugsweise an zumindest einem Ende eine lösbare Sperre zum Blockieren und Freigeben einer Beladeöffnung auf. so dass die Laufelemente auf einfache Weise in den Lagerstütze geladen werden können. Wenn mehrere Führungsschienen vorhanden sind, können diese ebenfalls eine Sperre haben. Das Herausfallen der Module wird so verhindert.

Die Führungsschienen sind bevorzugt zueinander leicht versetzt angeordnet, so dass die Filtermodule in einem Winkel gelagert sind.

Die Eingangsöffnungen und/oder die Ausgangsöffnungen können sich am Endbereich verjüngen. das Zusammenstecken der Module wird dadurch weiter vereinfacht.

Ein erfindungsgemäßes Verfahren zum Montieren einer Filtermodulanordnung, insbesondere mit einer der oben beschriebenen Anordnungen, hat die Schritte des Bereitstellens einer Vielzahl von gleichartigen Filtermodulen und einer Lagerstütze mit zumindest einer Führungsschiene, des Einsetzens der Filtermodule in die Führungsschiene, des Zusammenschiebens der Filtermodule und des Fixierens der Filtermodule. Dieses Verfahren ist höchst effizient zur Ausbildung einer Filtermodulanordnung.

### Kurze Beschreibung der Figuren

Figur 1a zeigt eine erste Verbindung eines Durchgangkanals der Fluidein- und -auslässe;
Figur 1b zeigt eine zweite zur ersten Verbindung komplementäre Verbindung eines Durchgangkanals der Fluidein- und -auslässe;
Figur 1c zeigt die Verbindungen aus den Figuren 1a und 1b in einem zusammengesteckten Zustand;
Figur 2a zeigt einen isometrischen Querschnitt durch einen bekannten Dichtungsring;
Figur 2b zeigt einen Querschnitt durch eine verbesserte Version eines Dichtungsrings;
Figur 3a zeigt eine erste senkrechte Ausrichtung und Aufhängung der Filtermodule in einer Lagerstütze in einer gleichen Ausrichtung;
Figur 3b zeigt eine zweite senkrechte Ausrichtung und Aufhängung der Filtermodule in einer Lagerstütze in einer entgegengesetzten Ausrichtung;
Figur 3c, zeigt eine erste horizontale Ausrichtung und Aufhängung der Filtermodule in einer Lagerstütze in einer gleichen Ausrichtung;
Figur 3d zeigt eine zweite generell Ausrichtung und horizontale Aufhängung der Filtermodule in einer Lagerstütze mit einem leicht geneigten Ausrichtung, in der die Verbindung der Fluidzufluss- und Fluidabflusskanäle zu erkennen ist;
Figur 4a zeigt Module in einer senkrechte Ausrichtung und Aufhängung in einer Lagerstütze, die als stangenförmiges Gerüst oder Gestell ausgebildet ist;
Figur 4b zeigt ein Filtermodul in einer senkrechten Ausrichtung und horizontalen einseitigen Aufhängung in einer in einer Lagerstütze, die als stangeförmiges Gerüst oder Gestell ausgebildet ist;
Figur 4c zeigt Filtermodule Filtermodul in einer senkrechten Ausrichtung und horizontalen zweiseitigen Aufhängung in einer in einer Lagerstütze, die als stangeförmiges Gerüst oder Gestell ausgebildet ist;
Figuren 5a-e zeigen verschiedene Lagerstellen für Aufhängungen von Filtermodulen an einer Lagerstütze;
Figur 6a zeigt eine erste Ausführungsform eines Laufelements mit Führungsschiene;
Figur 6b zeigt eine zweite Ausführungsform eines Laufelements mit Führungsschiene, die mit Rollen ausgebildet ist;
Figur 6c zeigt eine dritte Ausführungsform eines Laufelements mit Führungsschiene, die als Öse und Stange ausgebildet sind;
Figur 7a zeigt eine schematische Anordnung von Zugstangen für eine Fixiereinrichtung außerhalb eines beispielhaften Filtermoduls; und
Figur 7b zeigt eine schematische Anordnung von Zugstangen für eine Fixiereinrichtung innerhalb eines beispielhaften Filtermoduls.

### Beschreibung der bevorzugten Ausführungsformen

Generell sind die Kombinationen der Ausführungsformen nicht auf die gezeigten beschränkt. So können verschiedene Filtermodule 10 mit unterschiedlichen Lagerstützen 40, Laufelementen 28 oder Führungsschienen 42 versehen sein.

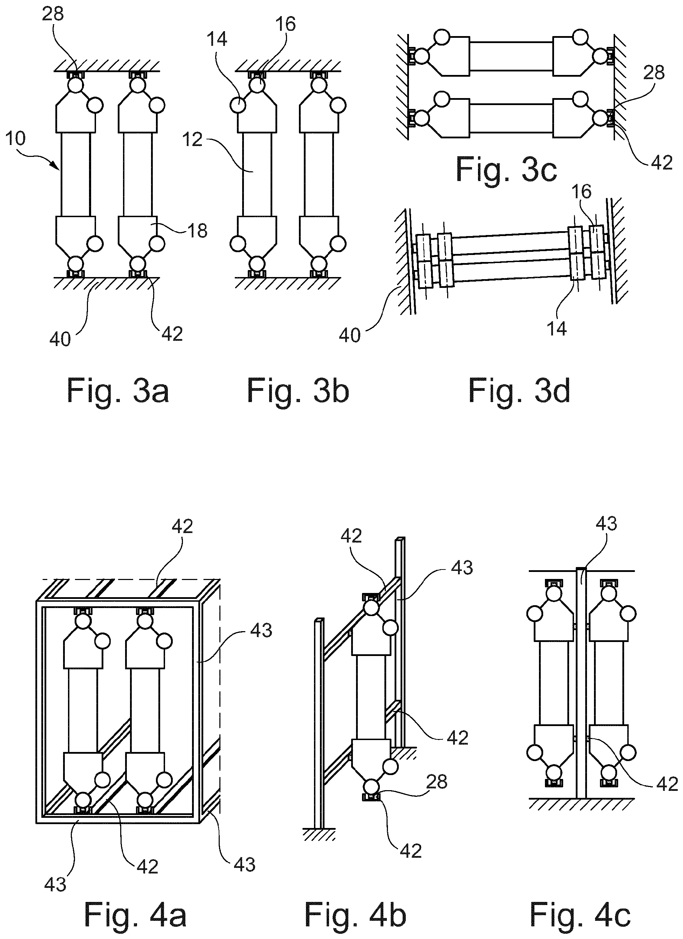

Das Filtermodul 10 weist einen Hauptkörper 12 auf, an dem zumindest ein Fluidzuflusskanal 14 und zumindest ein Fluidabflusskanal 16 ausgebildet sind (siehe Figuren 3a und 3b). In Figur 3b sind mehrere Filtermodule 10 dargestellt, wobei die Bezugszeichen nur beispielhaft zugeordnet sind und die Fluidabflusskanäle 16 sowie Fluidzuflusskanäle 14, im Folgenden auch Fluidkanäle genannt, auch umgekehrt angeordnet sein können. Die Fluidkanäle 14, 16 weisen in der Regel eine Eingangsöffnung 20 und eine Ausgangsöffnung 22 auf, durch die das Fluid zum Filtermodul 10 strömen kann und auch weiter zum nächsten Filtermodul 10. Ferner sind die Fluidzuflusskanäle 14 über eine Filtereinrichtung mit einem Filtratbereich verbunden, der das Rohfluid nach dem Filtern aufnimmt. Hier ist der Hauptkörper 12 als Filtratbereich ausgebildet, der das Filtrat dann nach dem Filtern zum Fluidabflusskanal 16 leitet. Die Fluidkanäle 14, 16 verlaufen in Figur 3a in einer Richtung in die Bildebene hinein. In Figur 3d verlaufen die Fluidkanäle 14, 16 von oben nach unten und sind zusammengesteckt. So ist gewährleistet, dass eine ganze Reihe von miteinander verbundenen Filtermodulen 10 über eine Zuleitung mit Rohfluid versorgt werden können. Jedes Filtermodul 10 nimmt einen Teil des durch die Eingangsöffnung 20 des Fluidzuflusskanal 14 einfließenden Rohfluids mit der Filtereinrichtung auf und leitet den Überschuss durch die Ausgangsöffnung weiter zum nächsten Modul. An dem letzten Modul, also an dem Filtermodul 10, das am äußersten Rand angeordnet ist, kann ein dafür ausgebildeter Deckel die Ausgangsöffnung verschließen. Analog gilt das für die Fluidabflusskanäle 16 ebenfalls, bei denen der Eingang des äußersten Filtermoduls 10 dann verschlossen ist und die Fluidabflusskanäle 16 miteinander und mit dem Filtratbereich verbunden sind, so dass das Filtrat abgeleitet werden kann. An dem Filtermodul 10 ist ferner auch ein Laufelement 28 vorgesehen, das als Aufhängungseinrichtung an der nachfolgend beschriebenen Lagerstütze 40 dient. Das Laufelement 28 ist als Roll- oder Gleiteinrichtung ausgebildet und an dem Filtermodul 10 befestigt, sodass das Filtermodul 10 mittels des Laufelements 28 bewegt werden kann. Nachfolgend wird unter Bezug auf die Figuren das Laufelement 28 noch eingehender beschrieben.

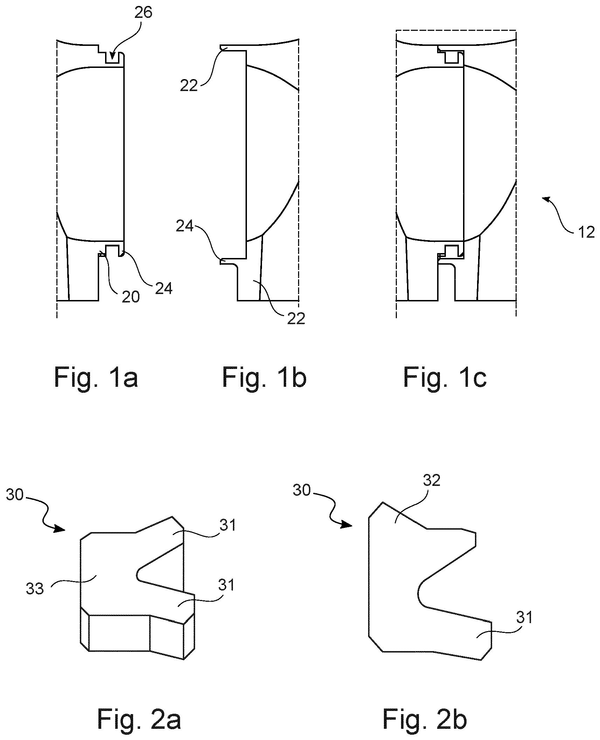

Normalerweise sind die einzelnen Filtermodule 10 mittels Rohren miteinander verbunden und die Ein- und Ausgangsöffnungen 20, 22 sind dann identisch ausgebildet. In der vorlegenden Erfindung sind die Ein- und Ausgangsöffnungen 20, 22 als zwei komplementäre Öffnungen ausgestaltet, so dass die Eingangsöffnung 20 in die Ausgangsöffnung 22 gesteckt werden kann. In Figur 1a ist beispielhaft eine Eingangsöffnung 20 gezeigt, die eine Nut 26 für einen Dichtring 30 aufweist. Die Eingangsöffnung 20 ist hier konkret ausgebildet, um in die Ausgangsöffnung 22 eingesteckt zu werden. Vorzugsweise ist daher am Einsteckende der Eingangsöffnung 20 eine Fase 24 oder eine andere Art Verjüngung oder ein Radius ausgebildet, mit dem das Einstecken vereinfacht wird. Ebenso kann an dem Einsteckende der in Figur 1b gezeigten Ausgangsöffnung 22 an der Innenseite eine gewinkelte Ausgestaltung wie eine Fase 24 vorgesehen sein. Die Öffnungen 20, 22 können auch so konstruiert sein, dass die Eingangsöffnung 20 die Ausgangsöffnung 22 aufnimmt und der Dichtring 30 kann an der Innenseite der aufnehmenden Öffnung vorgesehen sein. In Figur 1c ist gezeigt, wie die Öffnungen 20, 22 ineinander gesteckt sind.

Ein möglicher Querschnitt eines Dichtrings 30 ist in Figur 2a dargestellt. Der Dichtring 30 weist einen Querschnitt in Form eines seitlich liegenden "V" auf, wobei die Basis 33, an der die Schenkel 31 des "V" aufeinandertreffen rechteckförmig ist. Die beiden Schenkel 31 weisen aber voneinander weg. In Figur 2b ist eine modifizierte Form des Dichtrings 30 aus Figur 1a dargestellt, der die Dichtwirkung noch einmal erhöhen kann. Bei dieser Form gibt es einen Vorsprung 32, insbesondere einen dreiecksförmigen Vorsprung 32 am oberen Ende der rechteckförmigen Basis 33 auf. Ferner ist auch der obere Schenkel 31 sich verjüngend ausgebildet.

In den gezeigten Ausführungsformen sind die Fluidkanäle 14, 16 in einem Header 18 montiert, der auf dem Ende des Hauptkörpers 12 befestigt ist und dort als Deckelelement dient. Der Header 18 kann auch an beiden Enden des Hauptkörpers 12 vorgesehen sein, sodass von beiden Seiten Rohfluid zum Filtermodul 10 zugeführt und Filtrat abgeführt wird. Die Anzahl und Anordnung der Fluidkanäle 14, 16 können grundsätzlich variieren und auch die Header 18 können sich voneinander unterscheiden, sofern die Fluidmodule diese an der gleichen Stelle aufweisen, damit sie zusammengesteckt werden können. Ferner weist das Filtermodul 10 eine Filtereinrichtung (nicht gezeigt) auf, durch die Fluid aus dem Fluidzuflusskanal 14 in den Filtratbereich gefiltert wird. Die Filter eines Filtermoduls 10 sind in der Regel als Hohlfasermembran oder Flachmembran ausgebildet.

Um diese Filtermodule 10 miteinander zu lagern, ist - wie in Figur 3a gezeigt - eine Lagerstütze 40 vorgesehen, in der die Filtermodule 10 gehalten werden. Dafür weist die Lagerstütze 40 eine Führungsschiene 42 auf, in der die Filtermodule 10 gelagert und geführt sind. können. Eine solche Lagerstütze 40 kann vollkommen beliebig ausgebildet sein, sofern sie ausreichend stabil ist eine Vielzahl von Fluidmodulen zu halten. Beispielsweise kann die Lagerstütze 40 als Wand aus Beton, Ziegel, Holzbalken, oder anderen Materialien, als Gerüst oder Rahmen aus Metall wie Stahl oder Eisen oder auch nur als einfache Platte ausgebildet sein. Beispielsweise kann ein Rahmen, der hauptsächlich aus Führungsschienen 42 besteht, die Lagerstütze 40 ausbilden. In den Figuren sind unterschiedliche Lagerstützen 40 dargestellt, um verschiedene Aspekte der Erfindung zu beschreiben. Die konkrete Ausgestaltung der Lagerstütze 40 kann jedoch beliebig variiert werden und hängt nicht mit den einzelnen jeweils erläuterten Aspekten zusammen. Generell reicht eine Führungsschiene 42 aus, um die Filtermodule 10 zu halten, vorzugsweise sind jedoch für ein Filtermodul 10 zwei oder mehr Führungsschienen 42 vorgesehen, um es zu halten. Die Lagerung und vor allem das Bewegen der Filtermodule 10 wird durch mehrere Aufhängungspunkte vereinfacht. Es können auch für eine Führungsschiene 42 zwei Laufelemente 28 nebeneinander vorgesehen sein, sodass die Ausrichtung des Filtermoduls 10 in Bezug auf die Führungsschiene 42 festgelegt ist und damit die Ausrichtung der Filtermodule 10 zueinander ebenfalls. In die Führungsschiene(n) 42 wird/werden dann die Filtermodule 10 eingesetzt, entlang der Führungsschiene/n 42 bewegt und miteinander verbunden. Die Führungsschienen 42 können auch gekreuzt werden, insbesondere mit senkrechten Winkeln, so dass die Filtermodule 10 auch seitlich verschoben werden können. Beispielsweise kann eine nebengeordnete Führungsschiene 42 für den Austausch von Filtermodulen 10 vorgesehen sein, mit der man über solche senkrecht angeordneten Führungsschienen 42 auch auf mittig angeordnete Filtermodule 10 zugreifen kann. Dies kann den Austausch von beschädigten Filtermodulen 10 stark beschleunigen. Am Einlass der Führungsschiene 42 kann eine Sperre vorgesehen sein, bspw. eine Klappe oder ein Stift, die verhindert, dass ein Laufelement 28 des Filtermoduls 10 passieren kann und daher ein Herausfallen von randseitigen Filtermodulen 10 ebenfalls sicher vermeidet. Diese Sperre muss erst geöffnet werden, um die Filtermodule 10 in die Beladeöffnung der Führungsschiene 42 einzusetzen.

In den Figuren 3a bis d sind verschiedene Aufhängungen der Filtermodule 10 dargestellt. Die Lagerstütze 40 ist nur schematisch als Wand oder Decke mit Führungsschiene 42 gezeigt. In Figur 3a ist eine senkrechte Aufhängung dargestellt, bei der das Laufelement 28 jeweils an der Spitze der Header 18 ausgebildet ist (also ganz oben und ganz unten) und bei der die Fluidkanäle 14, 16 die gleiche Ausrichtung aufweisen. Hier sind die Führungsschienen 42 über und unter den Filtermodulen 10 angeordnet. in Figur 3b ist ebenfalls eine senkrechte Aufhängung gezeigt; bei der die Filtermodule 10 bezüglich der Fluidkanäle 14, 16 entgegengesetzt ausgerichtet sind. In Figur 3c ist eine horizontale Aufhängung gezeigt, bei der die Filtermodule 10 ebenfalls am Header 18 an der Lagerstütze 40 gelagert sind. Die horizontale Aufhängung kann wie schon oben erwähnt ebenfalls gleich oder entgegengesetzt ausgerichtet sein. In Figur 3d sind die Filtermodule 10 ebenfalls horizontal aufgehängt. Hier sieht man die Verbindung der Fluidkanäle 14, 16 direkt in der Draufsicht, wie ein zusammenhängender Fluidkanal ausgebildet wird, wenn die Fluidkanäle ineinander geschoben sind. Eine weitere Besonderheit bei Figur 3d ist, dass die Filtermodule 10 mit einer Neigung aufgehängt sind. Der Winkel der Neigung muss nicht besonders groß sein, beispielsweise 1-3°.

In den Figuren 4a bis 4c sind unterschiedliche Arten der Lagerstützen 40 gezeigt. In Figur 4a ist ein Lagerkäfig dargestellt, der unter anderem aus Stäben 43 in Form von Quer-, Längs- und Standstäben besteht und bei dem die Führungsschienen 42 zwischen den Stäben 43 angeordnet sind. Hier sind zwei Führungsschienen 42 dargestellt, aber es können auch mehr als zwei oder nur eine sein. in Figur 4b sind ebenfalls zwei Führungsschienen 42 zwischen zwei im Boden verankerten Stäben 43 gezeigt, die eine einseitige Anordnung von Filtermodulen 10 erlauben. Ferner können auch zusätzlich am Header 18 Laufelemente 28 und Führungsschienen 42 an der Lagerstütze 40 vorgesehen sein. In Figur 4c ist die Ausführung aus Figur 4b gezeigt, die eine zweiseitige Anordnung der Filtermodule 10 erlaubt. Hier kann es auch sinnvoll sein, statt zwei Stäben 43 eine Mittelwand oder eine Platte zu verwenden um die Stabilität zu erhöhen.

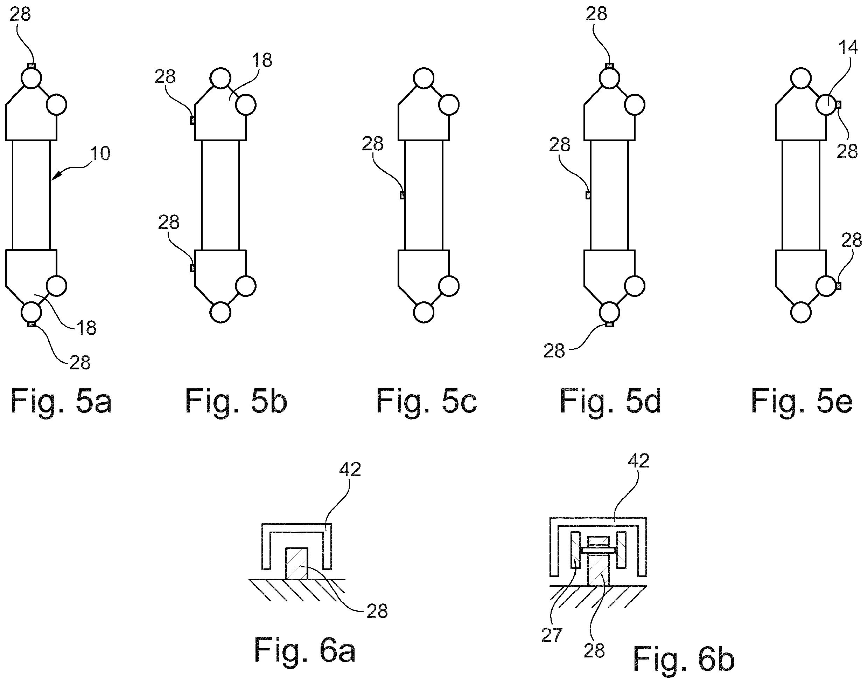

Die Figuren 5a bis 5e zeigen schematisch verschiedene Anordnungspunkte für die Laufelemente 28 an den Filtermodulen 10. In Figur 5a sind die Laufelemente 28 an den äußersten Enden des Headers 18 angeordnet. In Figur 5b sind die Laufelemente 28 an der Seite des Filtermoduls 10 vorgesehen. In Figur 5c ist nur ein Laufelement 28 an der Seite des Filtermoduls 10 angeordnet. Ein einzelnes Laufelement 28 kann aber auch oben am oberen Header 18 sein. In Figur 5d sind drei Laufelemente 28 vorgesehen, wobei die Anordnung eine Kombination der Anordnungen aus den Figuren 5a und 5c ist. Und in Figur 5e weisen die Fluidkanäle 14, 16 die Laufelemente 28 auf, hier konkret die Fluidzuflusskanäle 14.

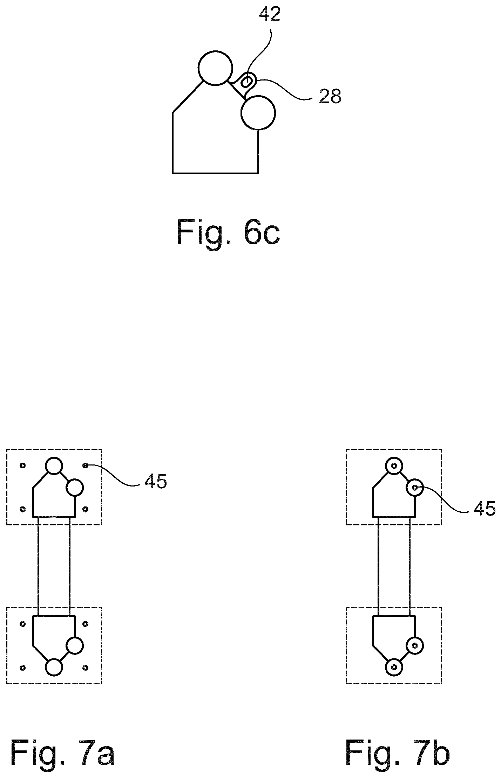

In den Figuren 6a bis 6c sind schematische Ausführungsformen von Laufelement 28 und Führungsschiene 42 dargestellt. in Figur 6a ist die Führungsschiene 42 als eine U-förmige Gleitschiene ausgebildet, in der ein Gleitstein als Laufelement 28 aufgenommen ist. Die umgekehrte Anordnung, bei der ein Schienenstück als Laufelement 28 eine Führungsschiene 42 aufnimmt, die als formschlüssige Stange ausgebildet ist, ist ebenfalls möglich. in Figur 6b ist eine Rad-unterstützte Führung gezeigt, bei der Führungsschiene 42 und Laufelement 28 als U-förmige Laufschiene und als Rollenelement mit Laufrädern oder Walzen ausgebildet sind. Bevorzugt ist, dass das Laufelement 28 die Rollen 27 aufweist, aber auch die umgekehrte Ausbildung ist möglich. in Figur 6c ist eine sehr einfache Ausführungsform gezeigt. Hier ist die Führungsschiene 42 als einfache Stange geformt, die von einer Öse an dem Filtermodul 10 eingefasst wird und die das Laufelement 28 bildet.

Das Spiel zwischen Laufelement 28 und Führungsschiene 42 kann je nach gewünschter Funktion und Anwendungsbereich der Modulanordnung angepasst werden. Wenn beispielsweise durch thermische Effekte oder Ähnliches Verformungen wie Längendehnungen auftreten können, kann ein Spiel diese ausgleichen und Beschädigungen an den Schienen und Laufelementen 28 verhindern. Wenn man dagegen eine Kraftübertragung zwischen Führungsschienen 42 und Laufelementen 28 haben will, sollte wenig bis kein Spiel gewährt werden. Für die Montage der Filtermodule 10 können dann die Führungsschienen 42 oder die Laufelemente 28 erwärmt werden, so dass sich das aufnehmende Element erweitert.

Die Anordnung der Filtermodule 10 funktioniert nun folgendermaßen: Es werden eine Vielzahl von gleichartig ausgebildeten Filtermodulen 10 bereitgestellt und die gewünschte Anordnung entschieden. Davon hängt dann die Ausbildung der Lagerstütze 40 ab, ebenso wie die Anzahl an Führungsschienen 42 und die Anordnung der Laufelemente 28 an den Filtermodulen 10. Die Filtermodule 10 werden dann je nach Größe mit einem Hilfsmittel wie einem Kranwagen, Gabelstapler, Bagger, Seilzügen oder nur mit Körperkraft der Arbeiter zur Lagerstütze 40 gebracht und mit den Laufelementen 28 in die Führungsschienen 42 eingesetzt (möglicherweise muss dafür die Sperre am Rand der Führungsschiene(n) 42 geöffnet werden). Dann werden die Filtermodule 10 zusammengeschoben. Insbesondere bei mehreren Lagerpunkten, bspw. durch mehrere Laufelemente 28, sind die Ein- und Ausgangsöffnungen 20, 22 schon zueinander ausgerichtet und lassen sich leicht ineinander einschieben.

Damit die so zusammengesetzte Modulanordnung sicher und fest zusammenbleibt, ist eine Fixiervorrichtung 45 vorgesehen, mit der die Filtermodule 10 zusammengedrückt werden. Diese Fixiervorrichtung 45 kann beispielsweise als Gewindestab oder als Schraube ausgebildet sein, der mit entsprechenden Gewinden in den Filtermodulen 10 und/oder in der Lagerstütze 40 zusammenwirkt und so eine Kraft auf die Filtermodule 10 ausübt. Eine andere Möglichkeit wäre eine Fixiervorrichtung 45 die in der Art eines Schnellspanners ausgebildet ist, sodass die beiden randseitigen Filtermodule 10 in einer Laufschiene mit einem Greifelement eingefasst und dann mit der Spannmechanik des Schnellspanners zusammengedrückt werden. In Figur 7a ist eine Fixiervorrichtung 45 außerhalb des Filtermoduls 10 schematisch gezeigt. Hier sind beispielhaft vier Spannelemente, bspw. Gewindestangen, pro Header 18 gezeigt. Die Fixierung muss aber nicht mechanisch wirken, sondern kann auch elektromagnetisch, hydraulisch oder pneumatisch erfolgen. In Figur 7b ist eine Anordnung der Fixiervorrichtung 45 in den Fluidkanälen 14, 16 gezeigt. Eine Fixiervorrichtung 45 kann aber auch an anderer Stelle des Hauptkörpers 12 oder des Headers 18 erfolgen. Ebenso ist eine Mischung aus innerhalb des Filtermoduls 10 und außerhalb des Filtermoduls 10 als Fixiervorrichtung 45 möglich.

### Bezugszeichenliste

Filtermodul 10
Hauptkörper 12
Fluidzuflusskanal 14
Fluidabflusskanal 16
Header 18
Eingangsöffnung 20
Ausgangsöffnung 22
Fase 24
Nut 26
Rolle 27
Laufelement 28
Dichtring 30
Schenkel 31
Vorsprung 32
Basis 33
Lagerstütze 40
Führungsschiene 42
Stab 43
Fixiervorrichtung 45

## Patentansprüche

1. Zusammensteckbare Filtermodulanordnung zum Filtern von Fluiden, umfassend
eine Vielzahl von Filtermodulen (10), wobei ein Filtermodul (10) einen Filtratbereich, einen mit dem Filtratbereich verbundenen Fluidzuflusskanal (14), einen mit dem Filtratbereich verbundenen Fluidabflusskanal (16) und eine Filtereinrichtung aufweist, durch die Fluid aus dem Fluidzuflusskanal (14) in den Filtratbereich gefiltert wird,
wobei der Fluidzuflusskanal (14) und der Fluidabflusskanal (16) jeweils ein Eingangsöffnung (20) und eine Ausgangsöffnung (22) aufweisen, die ineinander steckbar ausgebildet sind, so dass aus einer Vielzahl von Filtermodulen (10) jeweils ein gemeinsamer Fluidkanal (14, 16) ausgebildet ist, und
wobei die Filtermodule (10) zumindest ein Laufelement (28) aufweisen, an dem das Filtermodul (10) lagerbar ist; und
eine Lagerstütze (40), in dem die Vielzahl der Filtermodule (10) aufgenommen und befestigt sind, wobei die Lagerstütze (40) zumindest eine erste Führungsschiene (42) aufweist, in denen die Filtermodule (10) mittels der Laufelemente (28) bewegbar geführt und gelagert sind,
**dadurch gekennzeichnet, dass**
ein Filtermodul (10) zwei oder mehr Laufelemente (28) umfasst, die an zumindest zwei voneinander beabstandeten Stellen angeordnet sind und die mit einer zweiten oder weiteren Führungsschienen zusammenwirken.

2. Filtermodulanordnung nach Anspruch 1, bei der der Lagerstütze (40) eine Vielzahl von parallelen Führungsschienen (42) aufweist.

3. Filtermodulanordnung nach einem der vorhergehenden Ansprüche, bei der die Eingangsöffnungen (20) und/oder die Ausgangsöffnungen (22) eine Dichtung aufweisen.

4. Filtermodulanordnung nach einem der vorhergehenden Ansprüche, ferner umfassend eine Fixiervorrichtung (45) zum Zusammendrücken und Halten der Filtermodule (10) in der Lagerstütze (40).

5. Filtermodulanordnung nach einem der vorhergehenden Ansprüche, bei der die Laufelemente (28) oder die Führungsschienen (42) Rollen (27) zur reibungsarmen Bewegung aufweisen.

6. Filtermodulanordnung nach einem der vorhergehenden Ansprüche, bei der zumindest eine Führungsschiene (42) an zumindest einem Ende eine lösbare Sperre zum Blockieren und Freigeben einer Beladeöffnung aufweist.

7. Filtermodulanordnung nach einem der vorhergehenden Ansprüche, bei der die Führungsschienen (42) zueinander leicht versetzt angeordnet sind, so dass die Filtermodule (10) in einem Winkel gelagert sind.

8. Filtermodulanordnung nach einem der vorhergehenden Ansprüche, bei der die Eingangsöffnungen (20) und/oder die Ausgangsöffnungen (22) sich am Endbereich verjüngen.

9. Verfahren zum Montieren einer Filtermodulanordnung, insbesondere einer der Ansprüche 1-8, mit den Schritten:
• Bereitstellen einer Vielzahl von gleichartigen Filtermodulen (10) und einer Lagerstütze (40) mit zumindest zwei oder weiteren Führungsschienen (42);
• Einsetzen der Filtermodule (10) in die Führungsschienen (42) mittels Laufelementen (28), die an zumindest zwei voneinander beabstandeten Stellen des Filtermoduls (42) angeordnet sind;
• Zusammenschieben der Filtermodule (10); und
• Fixieren der Filtermodule (10).

## Claims

1. Filter module arrangement that can be slotted together for filtering fluids, comprising
a plurality of filter modules (10), wherein a filter module (10) has a filtrate area, a fluid inflow channel (14) connected to the filtrate area, a fluid outflow channel (16) connected to the filtrate area and a filter device through which fluid from the fluid inflow channel (14) is filtered into the filtrate area,
wherein the fluid inflow channel (14) and the fluid outflow channel (16) each have an inlet opening (20) and an outlet opening (22) which are formed to be able to slot into each other, with the result that in each case a common fluid channel (14, 16) is formed from a plurality of filter modules (10), and
wherein the filter modules (10) have at least one runner element (28), on which the filter module (10) can be supported, and
a bearing support (40) in which the plurality of filter modules (10) is received and secured, wherein the bearing support (40) has at least one first guide rail (42), in which the filter modules (10) are movably guided and supported by means of the runner elements (28),
**characterized in that**
a filter module (10) comprises two or more runner elements (28), which are arranged at at least two locations spaced apart from each other and which interact with a second or further guide rails.

2. Filter module arrangement according to claim 1, in which the bearing support (40) has a plurality of parallel guide rails (42).

3. Filter module arrangement according to one of the preceding claims, in which the inlet openings (20) and/or the outlet openings (22) have a seal.

4. Filter module arrangement according to one of the preceding claims, further comprising a fixing device (45) for pressing together and holding the filter modules (10) in the bearing support (40).

5. Filter module arrangement according to one of the preceding claims, in which the runner elements (28) or the guide rails (42) have rollers (27) for low-friction movement.

6. Filter module arrangement according to one of the preceding claims, in which at least one guide rail (42) has, at at least one end, a releasable detent for blocking and unblocking a loading opening.

7. Filter module arrangement according to one of the preceding claims, in which the guide rails (42) are arranged slightly offset relative to each other, with the result that the filter modules (10) are supported at an angle.

8. Filter module arrangement according to one of the preceding claims, in which the inlet openings (20) and/or the outlet openings (22) taper in the end area.

9. Method for assembling a filter module arrangement, in particular of one of claims 1-8, with the steps of:
• providing a plurality of similar filter modules (10) and a bearing support (40) with at least two or more guide rails (42);
• inserting the filter modules (10) into the guide rail (42) by means of runner elements (28) which are arranged spaced apart from each other at at least two locations of the filter module (42);
• pushing the filter modules (10) together; and
• fixing the filter modules (10).

## Revendications

1. Arrangement des modules de filtration connectables pour filtrer des fluides, comprenant une pluralité de modules de filtration (10), un module de filtration (10) comprenant une zone de filtrat, un canal d'arrivée de fluide (14) relié à la zone de filtrat, un canal de sortie de fluide (16) relié à la zone de filtrat et un dispositif de filtration à travers lequel le fluide provenant du canal d'arrivée de fluide (14) est filtré dans la zone de filtrat,
dans lequel le canal d'entrée de fluide (14) et le canal de sortie de fluide (16) comportent chacun un orifice d'entrée (20) et un orifice de sortie (22), qui peuvent être emboîtés l'un dans l'autre, de sorte que respectivement un canal de fluide commun (14, 16) est formé à partir d'une pluralité de modules de filtration (10), et
dans lequel les modules de filtration (10) comportent au moins un élément de roulement (28) sur lequel le module de filtration (10) peut reposer ; et
un support d'appui (40) dans lequel sont logés et fixés la pluralité des modules de filtration (10), le support d'appui (40) comportant au moins un premier rail de guidage (42) dans lequel les modules de filtration (10) sont guidés et supportés de manière mobile au moyen des éléments de roulement (28),
**caractérisé en ce que**
un module de filtration (10) comprend deux ou plusieurs éléments de roulement (28) qui sont disposés à au moins deux endroits espacés l'un de l'autre et qui coopèrent avec un deuxième rail de guidage ou d'autres rails de guidage.

2. Arrangement des modules de filtration selon la revendication 1, dans lequel le support d'appui (40) présente une pluralité de rails de guidage parallèles (42).

3. Arrangement des modules de filtration selon l'une quelconque des revendications précédentes, dans lequel les orifices d'entrée (20) et/ou les orifices de sortie (22) comportent un joint d'étanchéité.

4. Arrangement des modules de filtration selon l'une quelconque des revendications précédentes, comprenant en outre un dispositif de fixation (45) pour comprimer et maintenir les modules de filtration (10) dans le support d'appui (40).

5. Arrangement des modules de filtration selon l'une des revendications précédentes, dans lequel les éléments de roulement (28) ou les rails de guidage (42) comportent des galets (27) pour un déplacement à faible frottement.

6. Arrangement des modules de filtration selon l'une quelconque des revendications précédentes, dans lequel au moins un rail de guidage (42) comporte, à au moins une extrémité, un blocage amovible pour bloquer et libérer un orifice de chargement.

7. Arrangement des modules de filtration selon l'une quelconque des revendications précédentes, dans lequel les rails de guidage (42) sont disposés de manière légèrement décalée les uns par rapport aux autres, de sorte que les modules de filtration (10) sont montés à un angle.

8. Arrangement des modules de filtration selon l'une quelconque des revendications précédentes, dans lequel les orifices d'entrée (20) et/ou les orifices de sortie (22) se rétrécissent au niveau de la zone d'extrémité.

9. Procédé de montage d'un arrangement des modules de filtration, en particulier l'une des revendications 1 à 8, comprenant les étapes consistant à :
• fournir une pluralité de modules de filtration (10) de même type et un support d'appui (40) avec au moins deux rails de guidage (42) ou d'autres rails de guidage ;
• insérer les modules de filtration (10) dans les rails de guidage (42) au moyen d'éléments de roulement (28) qui sont disposés à au moins deux endroits du module de filtration (42) espacés l'un de l'autre ;
• pousser les modules filtrants (10) ensemble ; et
• fixer les modules de filtration (10).
